# EUROPÄISCHE PATENTSCHRIFT

(11) **EP 2 075 183 B1**
(45) Veröffentlichungstag und Bekanntmachung des Hinweises auf die Patenterteilung: **06.03.2013**
(21) Anmeldenummer: 08021406.7
(22) Anmeldetag: 10.12.2008
(51) Int. Cl.: B62K 5/08, B62K 3/00, B62K 5/05, A61G 5/02, B62K 15/00, B62K 3/16

(54) **Klappbares, behindertengerechtes Trike**
Foldable trike for invalid persons
Tricycle pliable pour handicapé

(30) Priorität: 24.12.2007 DE 102007062654
(43) Veröffentlichungstag der Anmeldung: 01.07.2009
(73) Patentinhaber: Schulze-Eyssing, Heinz, 69234 Dielheim (DE); Schulze-Eyssing, Gregor, 69168 Wiesloch (DE)
(72) Erfinder: Schulze-Eyssing, Heinz, 69234 Dielheim (DE); Schulze-Eyssing, Gregor, 69168 Wiesloch (DE)
(74) Vertreter: Kohler Schmid Möbus

(56) Entgegenhaltungen:
- EP-A- 1 086 888
- WO-A-2008/032969
- DE-A1- 10 239 357
- US-B1- 6 378 882

## Beschreibung

Die Erfindung betrifft ein Leichtfahrzeug, umfassend
ein Fahrwerk für zwei Vorderräder und ein Hinterrad,
wenigstens einen Sitz für einen Fahrer,
einen Zentralrahmen, an dem das Fahrwerk befestigt ist und welcher sich im Wesentlichen in Längsrichtung (Vorwärtsfahrtrichtung) des Leichtfahrzeugs
erstreckt,
und wenigstens einen Linearantrieb zum Antrieb des Leichtfahrzeugs, insbesondere des Hinterrads des Leichtfahrzeugs, mittels Muskelkraft,
wobei im Bereich des hinteren Endes des Zentralrahmens am Zentralrahmen eine Achsschwinge schwenkbar gelagert ist, in welcher wiederum das Hinterrad gelagert ist, wobei die Achsschwinge in einer vertikalen Ebene, die parallel zur Längsrichtung des Leichtfahrzeugs verläuft, verschwenkbar ist.

Eins solches Leichtfahrzeug ist bekannt geworden durch die DE 20 2005 015 717U1 oder die US 6 378 882 B1.

Muskelkraftgetriebene Leichtfahrzeuge, wie das Fahrrad, erfreuen sich als Transportmittel und Sportgeräte in der Bevölkerung großer Beliebtheit. Sie benötigen keine Kraftstoffe und sind daher im Unterhalt günstig und verursachen im Betrieb keinerlei Umweltverschmutzung. Zudem wird durch den Einsatz der Muskelkraft die Gesundheit gefördert.

Für behinderte Mitmenschen ist die Benutzung eines herkömmlichen Fahrrads oftmals nicht möglich. Die Führung eines Fahrrads benötigt gute motorische Fähigkeiten sowohl zum Halten der Balance als auch zum Betätigen der Pedalkurbeln für den Antrieb.

Menschen mit einer Querschnittslähmung können herkömmliche Fahrräder überhaupt nicht benutzen; aber auch Menschen mit weniger gravierenden Beinbehinderungen sind in vielen Fällen mit der komplizierten Kurbelbewegung am Fahrrad überfordert. Die DE 20 2005 015 717 U1 schlägt vor, den Kurbelantrieb eines Fahrrads durch einem Linearantrieb zu ersetzen. Ein solcher Linearantrieb umfasst eine linear geführte Treibstange, an der ein Antriebsmittel (meist ein Zahnriemen) befestigt ist, welcher über einen Freilauf Kraft auf eine Antriebswelle überträgt. An der Treibstange ist zur einfacheren Handhabung beispielsweise ein Fußpedal befestigt. Durch ein wiederholtes, geradliniges Verfahren der Treibstange (also eine Art pumpende Betätigung) durch den Fahrer kann dann das Fahrrad mit Muskelkraft angetrieben werden. Diese Betätigung der Treibstange ist motorisch viel einfacher auszuführen als eine Kurbelbewegung, und daher für viele behinderte Menschen noch ausführbar.

Eine sehr große Zahl an Menschen mit unterschiedlichsten Behinderungen ist weiterhin nicht in der Lage, die für das Halten der Balance am Fahrrad erforderliche reaktionsschnelle, ganzheitliche Körperbeherrschung anzuwenden. Die DE 20 2005 015 717 U1 schlägt insbesondere vor, das Fahrwerk eines mit Linearantrieb ausgestatteten Leichtfahrzeugs dreirädrig auszuführen. In diesem Fall wird der Fahrer von der Aufgabe des Balancehaltens entlastet.

Ein dreirädriges, mit Linearantrieb ausgerüstetes Leichtfahrzeug ist jedoch relativ sperrig und hat einen großen Platzbedarf. Daraus resultieren Probleme beim Abstellen oder Lagern des Leichtfahrzeugs, und natürlich auch beim Transport des Leichtfahrzeugs. In vielen Fällen ist ein behinderter Mensch darauf angewiesen, zur Benutzung des Leichtfahrzeugs aus Sicherheitsgründen einen verkehrsarmen Ort aufzusuchen. Nur wenn das Leichtfahrzeug sich gut transportieren lässt, insbesondere im Kofferraum eines normalen Personenkraftwagens, kann ein behinderter Mensch einen solchen verkehrsarmen Ort mit akzeptablem Aufwand aufsuchen und sein Leichtfahrzeug einsetzen.

Aus der DE 20 2005 015 717 U1 ist es bekannt, verschiedene Teile des dort beschriebenen Leichtfahrzeugs für eine Transportstellung klappbar auszuführen, und insbesondere eine ein Antriebsrad lagernde Schwinge schwenkbar auszuführen.

### Aufgabe der Erfindung

Es ist demgegenüber die Aufgabe der vorliegenden Erfindung, ein behindertengerechtes, mit Muskelkraft antreibbares Leichtfahrzeug vorzustellen, welches eine weiter verbesserte Transportierbarkeit aufweist.

### Kurze Beschreibung der Erfindung

Diese Aufgabe wird gelöst durch eine Leichtfahrzeug der eingangs genannten Art, das dadurch gekennzeichnet ist, dass der Zentralrahmen zwei sich im Wesentlichen in Längsrichtung des Leichtfahrzeugs erstreckende Zentralträger umfasst, wobei die beiden Zentralträger in horizontaler Richtung beabstandet angeordnet sind, und dass durch Verschwenken der Achsschwinge das Hinterrad in den Zwischenraum zwischen den beiden Zentralträgern hinein klappbar ist.

Ein großes Problem beim Transport eines dreirädrigen Leichtfahrzeugs ("Trike") in einem PKW-Kofferraum sind die großen Abmessungen des Leichtfahrzeugs in Längsrichtung (parallel der Vorwärtsfahrtrichtung). Die Erstreckung in Längsrichtung ist in der Regel die größte Dimension des Trikes und begrenzt die Unterbringung in einem PKW-Kofferraum. Die vorliegende Erfindung ermöglicht es, durch ein Verschwenken der Achsschwinge auf den Zentralrahmen zu die Erstreckung des Trikes in Längsrichtung in einer Transportstellung zu verkürzen. Aufgrund des zweigeteilten Zentralrahmens mit den beiden beabstandeten Zentralträgern kann das Hinterrad dabei zwischen die Zentralträger einschwenken. Das Hinterrad stört dadurch die Klappbarkeit in die Transportstellung nicht. Insbesondere ist es nicht notwendig, für eine kompakte Transportstellung das Hinterrad abzumontieren, was nicht nur einen erheblichen Montageaufwand (auch beim Wiederzusammenbau) darstellt, sondern auch einen motorisch eingeschränkten, behinderten Menschen schnell überfordern kann.

Durch die erfindungsgemäße Klappbarkeit des Trikes kann dieses sehr leicht transportiert werden. Aufgrund seines dreirädrigen Fahrwerks braucht von einem behinderten Fahrer keine Balance gehalten zu werden. Das erfindungsgemäße Trike ist außerdem durch seinen wenigstens einen Linearantrieb dazu eingerichtet, auch behinderten Menschen, die einen Kurbelantrieb nicht betätigen können, eine muskelkraftgetriebene Fortbewegung mit einem Leichtfahrzeug zu ermöglichen. Der oder die Linearantriebe können auf eine jeweilige Behinderung abgestimmt angeordnet werden. In vielen Fällen sind ein oder zwei Linearantriebe in einem oder beiden Zentralträgern vorteilhaft; dieser oder diese können dann mit einem Bein, beiden Beinen, insbesondere auch abwechselnd oder gleichzeitig betätigt werden. Für querschnittsgelähmte Personen bieten sich handbetätigte Linearantriebe an, die beispielsweise in Armlehnen am Fahrersitz angeordnet werden können. In letzterem Fall kann auch eine Fußstütze am Leichtfahrzeug angebracht werden. Die Linearantriebe können mit beliebigen Hublängen bei gleichbleibender Kraftübertragung betätigt werden, was ebenfalls für behinderte Menschen ein großer Vorteil ist und Justagen erspart.

Das erfindungsgemäße Trike kann so dazu beitragen, behinderte Menschen mehr am öffentlichen Leben teilhaben zu lassen.

### Bevorzugte Ausführungsformen der Erfindung

Eine besonders bevorzugte Ausführungsform des erfindungsgemäßen Leichtfahrzeugs sieht vor, dass an den beiden Seiten des Zentralrahmens an jedem Zentralträger jeweils eine vertikal verlaufende vordere Lagerachse, insbesondere ein vertikal verlaufender Lagerbolzen, ausgebildet ist, um die jeweils eine Halbachse schwenkbar ist, dass am Ende der Halbachsen jeweils ein Achsschenkelsystem ausgebildet ist, an dem ein Vorderrad lenkbar gelagert ist, und dass durch Verschwenken der Halbachsen diese mitsamt den jeweils gelagerten Vorderrädern an den Zentralrahmen heran klappbar sind. In dieser Ausführungsform kann auch die Breite des Leichtfahrzeugs leicht durch Einklappen der Halbachsen reduziert werden. Das Achsschenkelsystem ermöglicht es außerdem aufgrund seiner im Wesentlichen vertikalen Drehachse, auch die Vorderräder nahe und insbesondere flach an den Zentralrahmen heranzuklappen. Die Halbachsen weisen typischerweise jeweils an ihrem inneren (dem Achsschenkelsystem gegenüber liegenden) Ende eine Bohrung auf, in die die Lagerbolzen eingeschoben sind.

Eine bevorzugte Weiterbildung dieser Ausführungsform ist dadurch gekennzeichnet, dass an den beiden Seiten des Zentralrahmens an jedem Zentralträger jeweils eine vertikal verlaufende Lenkerlagerachse ausgebildet ist, um die jeweils ein Lenkergestänge, insbesondere ein Lenkerrohr, schwenkbar ist, wobei die Lenkergestänge jeweils über eine äußere Spurstange an einen Vorderradträger des Achsschenkelsystems der gleichen Seite angelenkt sind, dass die beiden Lenkergestänge über eine innere Spurstange gekoppelt sind, und dass die innere Spurstange zum Einklappen der Halbachsen lösbar oder teilbar ist. Die Lenkergestänge sind am Zentralrahmen sicher und robust gelagert. Durch die lösbare oder teilbare Spurstange kann das Lenksystem problemlos in das Heranklappen der Halbachsen integriert werden; der Montageaufwand für besagtes Heranklappen ist minimal und damit behindertengerecht.

Eine bevorzugte andere Weiterbildung ist dadurch gekennzeichnet, dass ein Arretiersystem vorgesehen ist, mit dem die Halbachsen in mehreren Verschwenkpositionen, insbesondere wenigstens drei Verschwenkpositionen je Halbachse, relativ zum Zentralrahmen arretiert werden können,
und dazu die innere Spurstange längenverstellbar und in mehreren Längeneinstellungen arretierbar ist. Diese Weiterbildung ermöglicht es, dass das Leichtfahrzeug in mehreren, unterschiedlichen Spurweiten der Vorderräder zu betreiben. Damit kann beispielsweise eine Anpassung an die Platzverhältnisse auf Radwegen, an die Statur des Fahrers oder die Sportlichkeit der geplanten Fahrweise erfolgen. Eine typische (längenverstellbare und teilbare) Spurstange kann beispielsweise zwei überlappende Teile mit ineinandergreifenden Zahnreihen umfassen, wobei die beiden Teile im Überlappungsbereich in eine sichernde Hülse eingeklemmt sind.

In einer vorteilhaften Weiterentwicklung dieser Weiterbildung ist vorgesehen, dass das Arretiersystem zwei Knotenbleche, insbesondere rippenversteifte Knotenbleche, mit jeweils einer im Wesentlichen in einer horizontalen Ebene verlaufenden, kreisbogenförmigen Außenkante umfasst, entlang der mehrere Ausnehmungen, Vorsprünge oder Löcher für einen Eingriff eines Arretierbolzens vorgesehen sind, und dass das Arretierungssystem weiterhin an den Halbachsen jeweils einen Arretierbolzen zum Eingriff in die Ausnehmungen, Vorsprünge oder Löcher eines Knotenblechs umfasst. Mit dieser Weiterentwicklung kann die Verstellbarkeit der Halbachsenpositionen einfach und robust gewährleistet werden. Man beachte, dass das Knotenblech selbst nicht unbedingt eine horizontale, kreisförmige Außenkante aufzuweisen braucht; es genügt, wenn die Ausnehmungen, Vorsprünge oder Löcher auf einer in einer horizontalen Ebene verlaufenden, kreisbogenförmigen Bahn am Knotenblech angeordnet sind.

Bei einer besonders bevorzugten Weiterbildung ist am Lenkergestänge jeweils ein in Längsrichtung des Lenkergestänges aus- und einschiebbarer Lenkergriff vorgesehen. Am einfachsten sind hierzu die Lenkergestänge jeweils als ein Lenkerrohr ausgebildet, in dem ein Lenkergriff verfahrbar ist. Der aus- und einschiebbare Lenkergriff ermöglicht es, Griffweiten des Lenkersystem flexibel einzustellen, und die Heranklappbarkeit der Halbachsen durch die Lenkergriffe für die Transportstellung nicht zu beeinträchtigen, insbesondere wenn im Fahrstellung des Trikes recht große Griffweiten der Lenkergriffe erwünscht sind. In der Transportstellung des Trikes sind die Lenkergriffe typischerweise ganz eingefahren, um die Außenabmessungen so klein wie möglich zu halten.

Bei einer anderen, bevorzugten Weiterbildung ist vorgesehen, dass die beiden vorderen Lagerachsen jeweils als Lagerbolzen ausgebildet sind, wobei die Lagerbolzen jeweils zwischen einem horizontalen Knotenbloch und einem horizontalen Stützblech verlaufen, die am benachbarten Zentralträger befestigt sind, dass die Lagerbolzen jeweils von einem elastischen Lagerfederelement, insbesondere Sustaflexelement, umgriffen sind, das auch am Knotenblech und Stützblech anliegt, und dass an den Lagerfederelementen jeweils die zugehörige Halbachse befestigt ist. Das Lagerfederelement ist zwischen Knotenblech und Stützblech sandwichartig eingeklemmt und durch den Lagerbolzen am Zentralrahmen gesichert. Das Lagerfederelement vermittelt so die Verbindung zwischen der zugehörigen Halbachse (und damit dem zugehörigen Vorderrad) und dem Zentralrahmen (und somit auch dem Sitz des Fahrers); dadurch wird eine komfortable Federung bezüglich der Vorderräder für den Fahrer erreicht. Man beachte, dass alternativ auch ein Federungssystem direkt an der Vorderradaufhängung, etwa als Teil des Achsschenkelsystems, möglich ist.

Eine besonders bevorzugte Weiterentwicklung zu dieser Weiterbildung sieht vor, dass an den Halbachsen jeweils ein Haltewinkel befestigt ist, auf dem ein weiteres elastisches Lagerfederelement, insbesondere weiteres Sustaflexelement befestigt ist, wobei das weitere Lagerfederelement zwischen dem Haltewinkel und dem Knotenblech eingespannt ist, und dass die weiteren Lagerfederelemente jeweils gegenüber der zugehörigen Halbachse um einen Längenbetrag L seitlich horizontal versetzt sind, insbesondere wobei der Längenbetrag L näherungsweise gleich ist dem seitlichen, horizontalen Versatz V zwischen dem Ende der Halbachse und der Vorderradachse am zugehörigen Achsschenkelsystem. Durch den seitlichen, horizontalen Versatz zwischen dem Ende einer Halbachse und der Vorderradachse kommt es zur Einbringung eines Moments auf die Halbachse bzw. die zugehörige vordere Lagerachse.

Durch das um den Längenbetrag L seitlich horizontal versetzte weitere Lagerfederelement wird dieses Moment aufgenommen und so die vordere Lagerachse (bzw. ein dortiger Lagerbolzen) entlastet.

Bei einer weiteren, vorteilhaften Weiterentwicklung weisen die horizontalen Knotenbleche jeweils mindestens ein Langloch auf, die von einem vertikalen, federnden Sicherungsstift durchragt werden können, wobei jeweils ein solcher Sicherungsstift an jeder Halbachse ausgebildet ist. Der Sicherungsstift blockiert in Fahrstellung durch ein Anliegen an den langen Seiten des Langlochs ein Verschwenken der Halbachsen, lässt aber gleichzeitig ein Auf- und Abschwingen der Halbachsen, also das eigentliche Federn der Vorderräder, zu,
wobei sich der Sicherungsstift entlang der langen Seiten des Langlochs bewegt. Bei mehreren arretierbaren Verschwenkpositionen der Halbachsen ist bevorzugt für jede Verschwenkposition ein Langloch vorgesehen. Der Sicherungsstift kann auch nicht-federnd ausgebildet sein. Bevorzugt kann der Sicherungsstift durch eine Abdrückschraube ausgehängt werden, um eine Spurverstellung oder ein Heranklappen der Halbachsen zu ermöglichen.

Besonders bevorzugt ist weiterhin eine Ausführungsform des erfindungsgemäßen Leichtfahrzeugs, bei dem in wenigstens einem der Zentralträger ein Linearantrieb ausgebildet ist, umfassend eine Treibstange, die im Zentralträger linear geführt ist und an deren vorderem Ende ein Pedal angeordnet ist. Bevorzugt ist die Treibstange dabei unverdrehbar im Zentralträgern geführt. Die beiden Zentralträger, die bevorzugt ausgebildet sind als Zentralrohre, sind hervorragend dazu geeignet, fußbetätigte Linearantriebe (bzw. zumindest zugehörige Triebstangen) aufzunehmen. Die Zentralträger bekommen damit zusätzlich zu ihrer Trägerfunktion als Teil des Zentralrahmens noch eine Unterbringungsfunktion, wobei die Zentralträger auch noch in der Nähe der Füße eines (vorwärts blickenden) sitzenden Fahrers enden und von diesem durch Beinstreckung leicht betätigt werden können.

Besonders bevorzugt ist eine Weiterbildung, bei der in beiden Zentralträgern jeweils ein solcher Linearantrieb ausgebildet ist. In diesem Fall kann der Fahrer je nach Ermüdung und Bedarf wahlweise den einen oder den anderen Linearantrieb, oder auch beide Linearantriebe gleichzeitig, betätigen.

Bei einer bevorzugten Ausführungsform ist wenigstens ein handbetätigbarer Linearantrieb vorgesehen, umfassend eine Treibstange, die insbesondere in einer Armlehne des Sitzes linear geführt ist, wobei am Ende der Treibstange ein Handgriff angeordnet ist. Dadurch wird das Leichtfahrzeug für Personen mit funktionsuntüchtigen oder nicht vorhandenen Beinen (etwa querschnittsgelähmte Menschen) per Hand antreibbar. Im Rahmen der Erfindung können auch zwei handbetätigbare Linearantriebe, insbesondere mit Treibstangen in beiden Armlehnen, vorgesehen sein. Die Treibstangen sind jeweils bevorzugt unverdrehbar geführt.

Bevorzugt ist auch eine Ausführungsform eines erfindungsgemäßen Leichtfahrzeugs, bei der der wenigstens eine Linearantrieb eine Treibstange umfasst, an der ein Zahnriemen befestigt ist, der mit einer Zahnriemenscheibe einer Hauptantriebswelle oder einer Hilfsantriebswelle in Eingriff steht. Auf diese Weise kann auf einfache Weise Kraft vom Linearantrieb auf die Haupt-oder Hilfsantriebswelle übertragen werden. Im Falle einer Übertragung auf eine Hilfsantriebswelle ist die Hilfsantriebswelle wiederum an die Hauptantriebswelle gekoppelt. Man beachte, dass in die Kopplung von Treibstange und Hauptantriebswelle ein Freilauf integriert ist. Alternativ sind auch andere Antriebsmittel als Zahnriemen und Zahnriemenscheibe möglich, insbesondere eine Kette und ein Kettenritzel, oder auch ein Seilzug.

Bevorzugt ist weiterhin eine Ausführungsform, bei der im Bereich des hinteren Endes des Zentralrahmens im Zentralrahmen eine Hauptantriebswelle gelagert ist, auf die durch den wenigstens einen Linearantrieb Kraft übertragbar ist, und die an die Achse des Hinterrads gekoppelt ist. Die Lage der Hauptantriebswelle am hinteren Ende des Zentralrahmens erleichtert die Kopplung an das angetriebene Hinterrad. Bevorzugt übertragen alle Antriebe des Leichtfahrzeugs ihre Kraft unabhängig voneinander auf die Hauptantriebswelle.

Eine vorteilhafte Weiterbildung dieser Ausführungsform sieht vor, dass die Hauptantriebswelle und die Hinterradachse über eine Kette, einen Zahnriemen oder ein anderes Antriebsmittel gekoppelt sind, wobei die Kette, der Zahnriemen oder das andere Antriebsmittel mit einem Spanner zum Längenausgleich versehen ist, insbesondere wobei der Antrieb des Hinterrads über eine Kettenschaltung erfolgt. Ein eigenständiger Spanner ist bei Verwendung (nur) einer Nabenschaltung an der Hinterradnabe bevorzugt; im Falle einer Kettenschaltung am Hinterrad ist der Spanner funktional in die Kettenschaltung integriert. Durch den Spanner wird das Antriebsmittel nach dem Ausklappen der Achsschwinge (von der Transportstellung zurück in die Fahrstellung) automatisch eingestellt.

Bei einer anderen, bevorzugten Ausführungsform ist vorgesehen, dass der Sitz eine Rückenlehne und einen Untersitz für den Fahrer aufweist, wobei die Rückenlehne auf den Untersitz klappbar ist. Auch dadurch kann das Trike für den Transport besser kompaktiert werden.

Eine andere, bevorzugte Ausführungsform sieht vor, dass die Achsschwinge des Leichtfahrzeugs über einen Stoßdämpfer oder ein anderes Federelement an einem Stützelement, insbesondere einem Stützrohr, befestigt ist, wobei das Stützelement am Zentralrahmen starr befestigt ist, und dass die Befestigung des Stoßdämpfers oder anderen Federelements an der Achsschwinge für das Einklappen des Hinterrads lösbar ist. Durch den Stoßdämpfer oder das andere Federelement federt das Hinterrad gegenüber dem Zentralrahmen (und dem Sitz), was den Fahrkomfort erhöht. Man beachte, dass alternativ auch der Stoßdämpfer oder das Federelement lösbar vom Zentralrahmen ausgebildet sein kann. Das Federelement kann eine Metallfeder (z.B. eine Schraubenfeder) umfassen, oder auch aus Gummi ausgebildet sein.

Bei einer vorteilhaften Ausführungsform ist ein Zusatzsitz, insbesondere ein Kindersitz, bevorzugt ein Kindersitz für ein behindertes Kind, vorgesehen. In diesem Fall kann das Leichtfahrzeug außer dem Fahrer auch weitere Personen transportieren. Der Zusatzsitz ist am einfachsten hinter dem Sitz für den Fahrer angeordnet.

Bevorzugt ist auch eine Ausführungsform, bei der die beiden Zentralträger jeweils als Profilrohre ausgebildet sind. Besonders bewährt, insbesondere bezüglich der mechanischen Stabilität, hat sich ein rechteckförmiger Rohrquerschnitt. Im Inneren eines solchen Profilrohrs kann leicht eine Führung für Treibstangen untergebracht werden, insbesondere für Treibstangen mit einem C-förmigen Profil.

Bevorzugt ist weiterhin eine Ausführungsform, bei der an den beiden hinteren Enden der Zentralträger jeweils zwei Lagerbleche mit je einem Lagerbolzen quer zur Längsrichtung des Leichtfahrzeugs ausgebildet sind, wobei die Achsschwinge um die Lagerbolzen schwenkbar ist. Damit kann die Verschwenkbarkeit der Achsschwinge leicht realisiert werden, insbesondere unabhängig (beabstandet) von einer Hauptantriebswelle.

Bei einer anderen, vorteilhaften Ausführungsform ist ein zusätzlicher Kurbelantrieb für das Leichtfahrzeug vorgesehen, insbesondere wobei der Kurbelantrieb im Bereich des vorderen Endes des Zentralrahmens zwischen den Zentralträgern angeordnet ist. Bei manchen Behinderungen kann ein Kurbelantrieb vom Fahrer noch bedient werden, in diesem Fall kann ein Kurbelantrieb den mindestens einen Linearantrieb entlasten, um so einer Ermüdung des Fahrers entgegenzuwirken. Der vordere Teil des Zwischenraums zwischen den Zentralträgern wird in der Regel auch in Transportstellung vom Hinterrad nicht durchragt, so dass dieser Platz für den zusätzlichen Kurbelantrieb zur Verfügung steht.

Bevorzugt ist auch eine Ausführungsform, bei der zusätzlich ein Elektroantrieb für das Leichtfahrzeug vorgesehen ist. Der Elektroantrieb kann ebenfalls den mindestens einen Linearantrieb entlasten, um so einer Ermüdung des Fahrers entgegenzuwirken.

Besonders bevorzugt ist eine Ausführungsform, die dadurch gekennzeichnet ist, dass zwei fußbetätigbare Linearantriebe in den Zentralträgern, zwei handbetätigbare Linearantriebe sowie ein Kurbelantrieb vorgesehen sind, die unabhängig voneinander zum Antrieb des Hinterrads mittels Muskelkraft einsetzbar sind. Die Antriebsmöglichkeiten können je nach Behinderung genutzt werden, um so bei besonders vielen Arten von Behinderungen eine Fortbewegung mit dem erfindungsgemäßen Trike zu ermöglichen.

In den Rahmen der vorliegenden Erfindung fällt auch ein erfindungsgemäßes, oben beschriebenes Leichtfahrzeug, das dadurch gekennzeichnet ist, dass anstelle des Fahrwerks für zwei Vorderräder und ein Hinterrad ein Fahrwerk für ein Vorderrad und zwei Hinterräder vorgesehen ist, wobei im Bereich des vorderen Endes des Zentralrahmens am Zentralrahmen eine Achsschwinge schwenkbar gelagert ist, in welcher wiederum das Vorderrad gelagert ist, und
wobei durch Verschwenken der Achsschwinge das Vorderrad in den Zwischenraum zwischen den beiden Zentralträgern hinein klappbar ist. Die erfindungsgemäße Mechanik lässt sich mit den beschriebenen Vorteilen auch auf diesen alternativen Fahrwerkaufbau übertragen bzw. anwenden. Bevorzugt ist dabei das Vorderrad gelenkt, und die Hinterräder werden durch den wenigstens einen Linearantrieb angetrieben.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Aufsicht auf ein erfindungsgemäßes Trike in Fahrstellung;
- Fig. 2: das Trike von Fig. 1 in einer schematischen Seitendarstellung;
- Fig. 3: das Trike von Fig. 1 in einer schematischen Frontansicht;
- Fig. 4: eine schematische Querschnittsansicht eines linearen Handantriebs von der Seite für ein erfindungsgemäßesTrike;
- Fig. 5: der Handantrieb von Fig. 4 in einer schematischen Querschnittsansicht von vorne;
- Fig. 6: der Handantrieb von Fig. 4 in einer schematischen Querschnittsansicht von oben;;
- Fig. 7: das Trike von Fig. 1 in Fahrstellung in einer weiteren schematischen Seitendarstellung;
- Fig. 8: das Trike von Fig. 7 in Aufsicht;
- Fig. 9: das Trike von Fig. 7 in Transportstellung, in einer schematischen Aufsicht;
- Fig. 10: das Trike von Fig. 9 in Transportstellung, in einer schematischen Seitenansicht;
- Fig. 11: eine schematische Querschnittsdarstellung (entlang der Halbachse) der Befestigung einer Halbachse am Zentralrahmen eines erfindungsgemäßen Trikes über ein elastischen Lagerfederelement;
- Fig. 12: einen schematischen Querschnitt (senkrecht zur Halbachse) durch die Befestigung der Halbachse von Fig. 11 im Bereich eines Arretierbolzens;
- Fig. 13: eine schematische Aufsicht auf die Befestigung von Fig. 11.

### Überblick

Die vorliegende Erfindung stellt ein dreirädriges Leichtfahrzeug (Trike) vor, das vielfältigen Anforderungen insbesondere bezüglich der Nutzbarkeit durch behinderte Mitmenschen gerecht wird. Das Trike ist mit (mindestens) einem Linearantrieb ausgestattet. Die Besonderheit des erfindungsgemäßen Trikes ist es, dass es so zusammengeklappt (zusammengefaltet) werden kann, dass ein Körper von ca. 980 x 420 x 520 mm Größe (in Transportstellung) oder noch geringer entsteht, der leicht in einem normalen PKW zu transportieren ist.

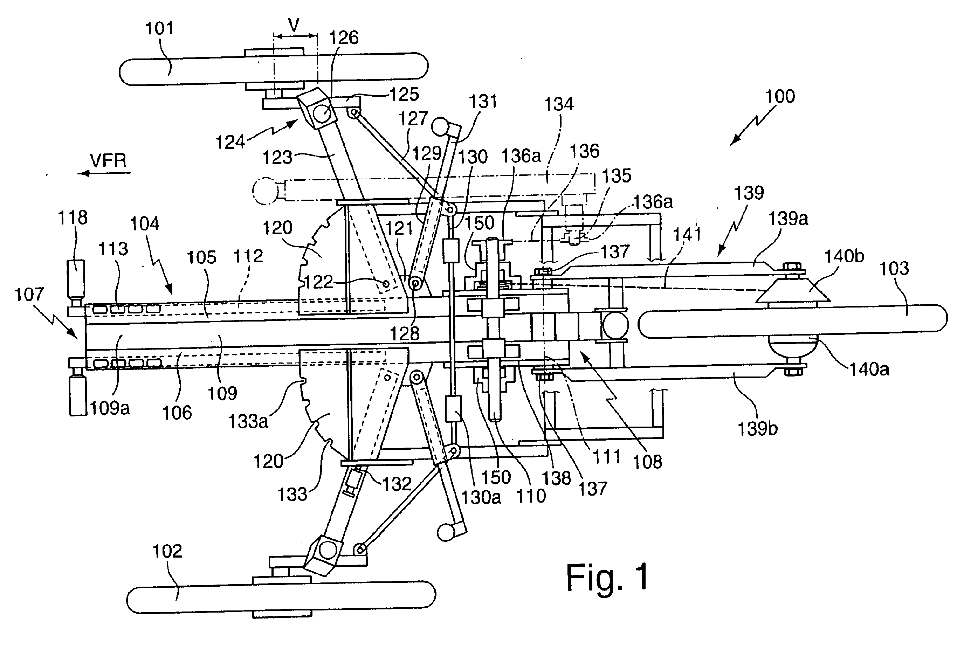

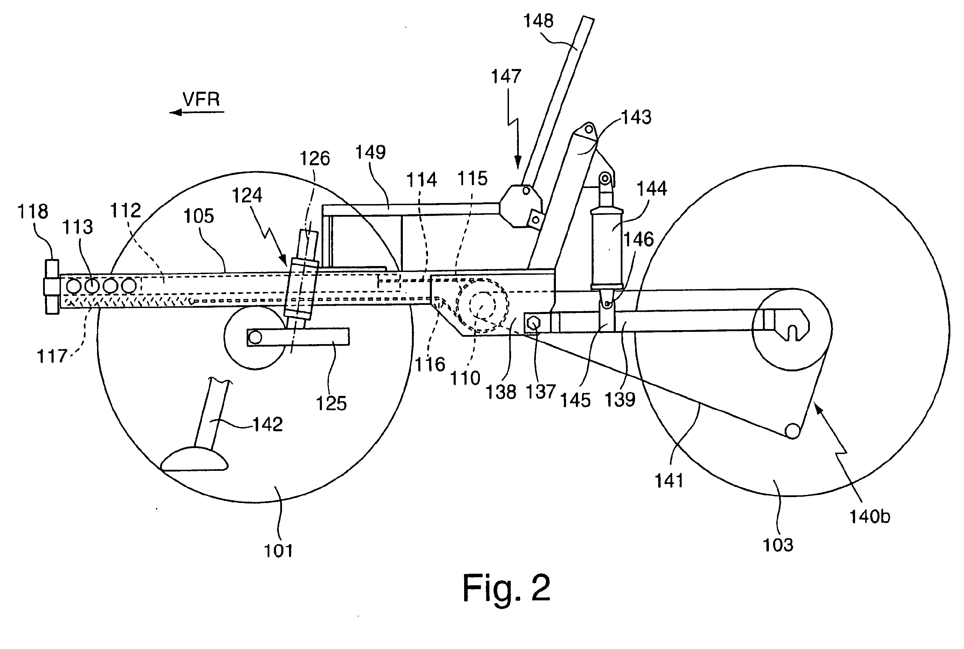

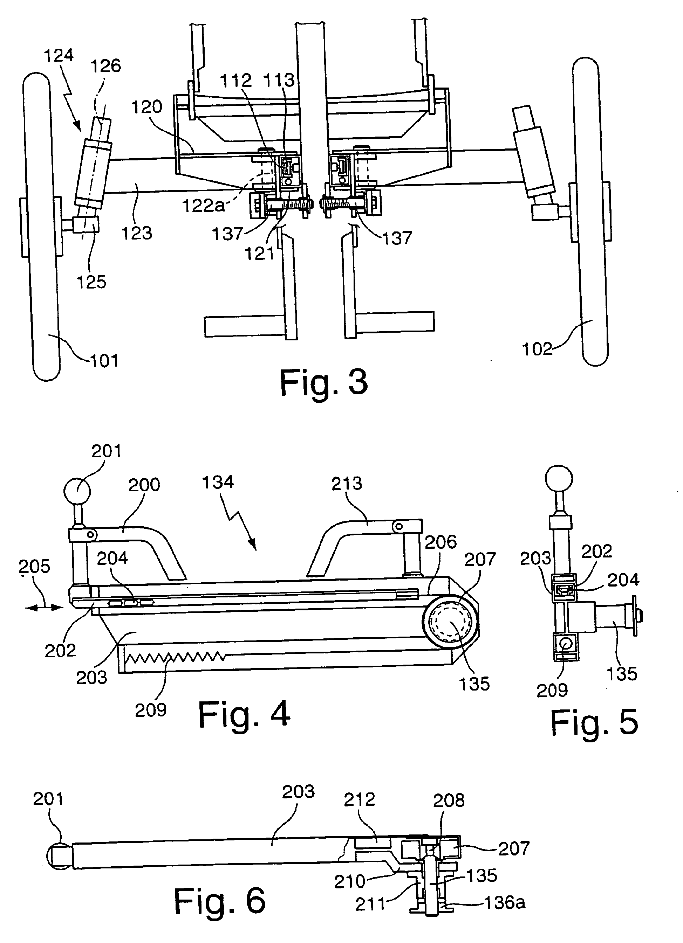

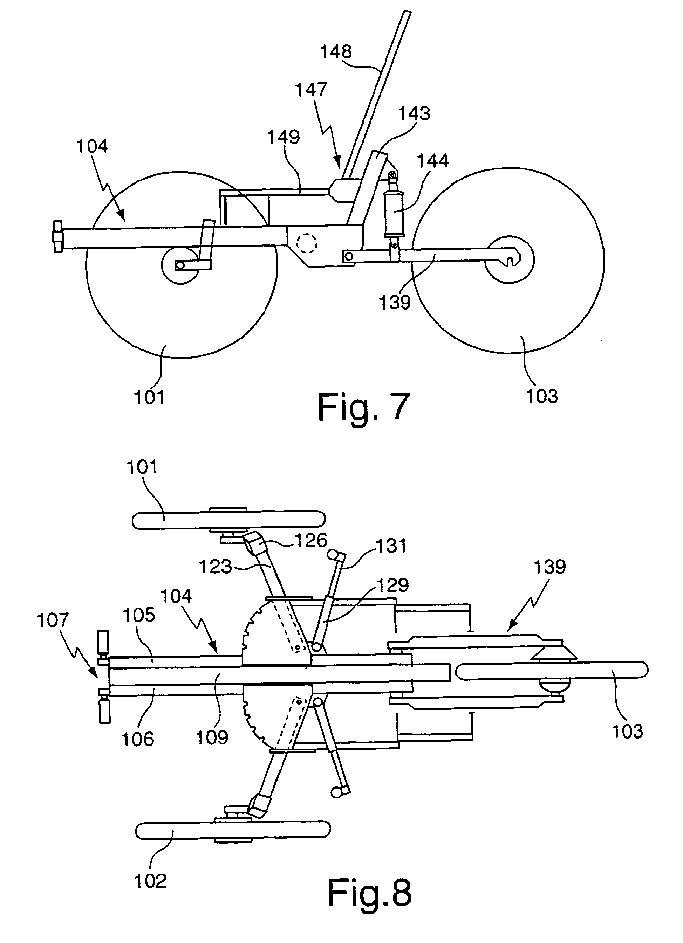

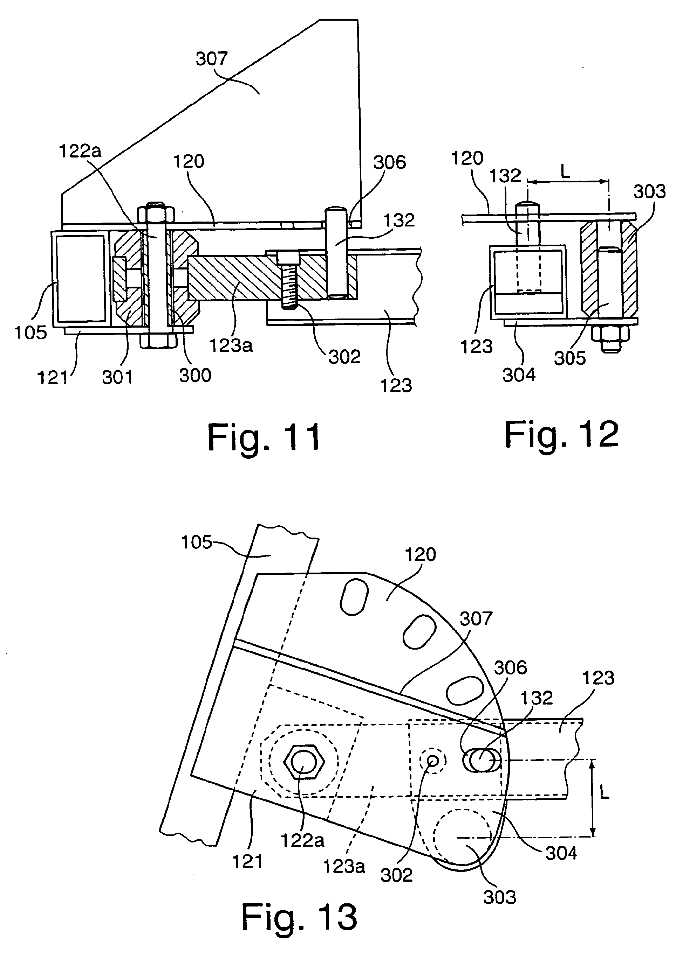

Der Grundaufbau einer beispielhaften Ausführungsform des erfindungsgemäßen Trikes wird anhand der Figuren 1 bis 3 in Fahrstellung erläutert. Mit den Figuren 4 bis 6 wird ein linearer Handantrieb (handbetätigter Linearantrieb) für das Trike erläutert. Mit den Figuren 7 bis 10 wird der Klappvorgang (Faltvorgang) des Trikes erläutert. Die Figuren 11 bis 13 erläutern ein Federungsprinzip der Halbachsen, an denen die beiden Vorderräder befestigt sind.

### Grundaufbau eines erfindungsgemäßen Trikes

Die **Figuren 1 bis 3** zeigen eine Ausführungsform eines erfindungsgemäßen Leichtfahrzeugs (Trikes) 100, umfassend zwei Vorderräder 101, 102 und ein Hinterrad 103, die jeweils als 20-Zoll-Räder ausgebildet sind. Das Trike 100 besitzt einen Zentralrahmen 104, welcher zwei parallel verlaufende, horizonatal beabstandete Zentralträger 105, 106 aufweist, die als rechteckige Profilrohre ausgebildet sind (hier 30 x 50 mm, Wandstärke 1,5 mm). Im Bereich des vorderen Endes 107 und des hinteren Endes 108 des Zentralrahmens 104 sind die Zentralträger 105, 106 für eine Verbesserung der Stabilität miteinander verbunden, insbesondere auch im Bereich einer Hauptantriebswelle 110 und einer Schwingenachse 111. Zwischen den Zentralträgern 105, 106 verbleibt ein Zwischenraum 109. Ein vorderer Teil des Zwischenraums 109 kann als Kanal 109a zum Einsetzen eines zusätzlichen Kurbelantriebs (nicht dargestellt) genutzt werden.

In den Zentralträgern 105, 106 ist jeweils ein Linearantrieb ausgebildet. Jeder Linearantrieb umfasst eine Treibstange 112 mit (hier) C-förmigem Profil, die im Inneren des zugehörigen Zentralträgers 105, 106 horizontal (parallel der Vorwärtsfahrtrichtung VFR) auf einer Rolllagerung 113 verschiebbar gelagert ist. Am hinteren Ende der Treibstange 112 ist ein Zahnriemen 114 befestigt, der über eine Zahnriemenscheibe 115, die auf der Hauptantriebswelle 110 angeordnet ist, seine Kraft an die Hauptantriebswelle 110 überträgt. Die Zahnriemenscheibe 115 besitzt einen eingebauten Freilauf (nicht eingezeichnet). Über eine Umlenkrolle 116 wird der Zahnriemen 114 zu einer Rückrollfeder 117 geführt, die die Treibstange 112 in die im Zentralträger 112 eingefahrene Position vorspannt. Am vorderen Ende der Treibstange 112 ist ein Pedal 118 für eine Fußbetätigung befestigt.

An den beiden außen liegenden Seiten der Zentralträger 105, 106 sind jeweils ein Knotenblech (mit Steg) 120 und ein Stützblech (Lagerflansch) 121 angeschweißt. Zwischen Knotenblech 120 und Stützblech 121 verläuft jeweils eine vertikale vordere Lagerachse 122, die als Lagerbolzen 122a ausgebildet ist. Um jeden Lagerbolzen 122a ist eine Halbachse 123 drehbar gelagert; die Halbachse 123 kann dabei in einer horizontalen Ebene verschwenkt werden.

Am äußeren Ende einer jeden Halbachse 123 ist ein Achsschenkelsystem 124 ausgebildet. Mit diesem ist es möglich, einen Vorderradträger 125 um eine geringfügig gegen die Vertikale geneigte Schwenkachse 126 zu drehen, was für eine Lenkung der Vorderräder 101, 102 eingesetzt wird. Am Vorderradträger 125 ist am vorderen Ende ein Vorderrad 101, 102 gelagert. Am hinteren Ende des Vorderradträgers 125 ist für die Lenkung eine äußere Spurstange 127 angelenkt.

An jedem Stützblech 121 ist weiterhin eine vertikale Lenkerlagerachse 128 ausgebildet, um die ein Lenkergestänge 129, hier ein Lenkerrohr, drehbar gelagert ist. Am jeweils äußeren Ende des Lenkergestänges 129 ist die zugehörige äußere Spurstange 127 der Seite angelenkt. Die Lenkergestänge 129 zu beiden Seiten des Zentralrahmens 104 sind weiterhin über eine innere Spurstange 130 miteinander gekoppelt. In jedem Lenkergestänge 129 ist ein ausfahrbarer (und in verschiedenen Positionen arretierbarer) Lenkergriff 131 angeordnet.

Die innere Spurstange 130 ist zum Zwecke des Einklappens der Vorderräder 101, 102 und zum Zwecke der Spurweitenverstellung der Vorderräder 101, 102 lösbar oder teilbar, und in verschiedenen Längeneinstellungen arretierbar. Für die Längenverstellbarkeit und die Teil- oder Lösbarkeit sind verschiedene Ausbildungen der inneren Spurstange 130 denkbar, am einfachsten können ineinander greifende Zahnreihen verschiedener Stangenteile eingesetzt werden, wobei die Lage der eingreifenden Stangenteile durch eine aufschraubbare, arretierende Hülse 130a fixiert wird. Verschiedene Verschwenkpositionen der Halbachsen 123 - und damit Spurweiten - können mit einem Arretierbolzen 132 auf einer jeden Halbachse 123 fixiert werden,
wobei der Arretierbolzen 132 in verschiedene Ausnehmungen 133 auf dem kreisbogenförmig ausgebildeten Knotenblech 120 eingreifen kann.

In Fig. 1 gestrichelt eingezeichnet ist ein linearer Handantrieb 134, der in den Figuren 4 bis 6 näher erläutert wird. Der Handantrieb 134 verfügt über eine Hilfsantriebswelle 135, die über eine Kette 136 an die Hauptantriebswelle 110 mit einer Kupplung mit Kettenritzel 136a gekoppelt ist.

Am hinteren Ende des Zentralrahmens 104 ist ein Lagerblech 138 angeschweißt, an dem zwei Schwingenlagerbolzen 137 gelagert sind. Die zwei Schwingenlagerbolzen 137 bilden die Schwingenachse 111 aus. Um die Schwingenlagerbolzen 137 ist eine zweiteilige Achsschwinge 139 (umfassend die Teilschwingen 139a, 139b) verschwenkbar. Die Achsschwinge 139 hält das Hinterrad 103, wobei an der Nabe 140a des Hinterrads 103 eine Kettenschaltung 140b (etwa 7-Gang) und in der Nabe 140a eine Nabenschaltung (etwa 3-Gang) zur Übersetzungsänderung ausgebildet ist.
Eine Kette 141 koppelt die Hinterradachse an die Hauptantriebswelle 110. An dieser sind hier zwei Kettenritzel ausgebildet (vgl. Fig. 1), mit denen ebenfalls die Übersetzung geändert werden kann. Die Hauptantriebswelle 110 sitzt dabei in zwei Lagerflanschen 150.

Am Zentralrahmen 104 ist ein Stützelement 143, hier ein Stützrohr, in leicht gegen die Vertikale nach hinten geneigter Stellung starr befestigt. An diesem Stützelement 143 ist ein Stoßdämpfer 144 angelenkt, welcher wiederum am der Achsschwinge 139 angelenkt ist. Dabei ist die Befestigung an der Achsschwinge 139 leicht lösbar, hier mittels einer bolzengesicherten Muffe 145. Durch Herausziehen bzw. Einfügen des Bolzens 146 kann diese Befestigung leicht gelöst und wieder montiert werden. Am Stützelement 143 ist außerdem ein Sitz 147 abgestützt. Die Rückenlehne 148 des Sitzes ist auf die Sitzschale 149 klappbar.

Im Bereich des vorderen Teils des Zentralrahmens 104 kann eine Fußstütze 142 ausgebildet sein, auf die der Fahrer seine Füße abstellen kann (etwa bei Ermüdung des Fahrers, oder falls der Fahrer aufgrund einer Behinderung nur einen oder auch keinen fußbetätigbaren Linearantrieb nutzen kann.

### Klappvorgang

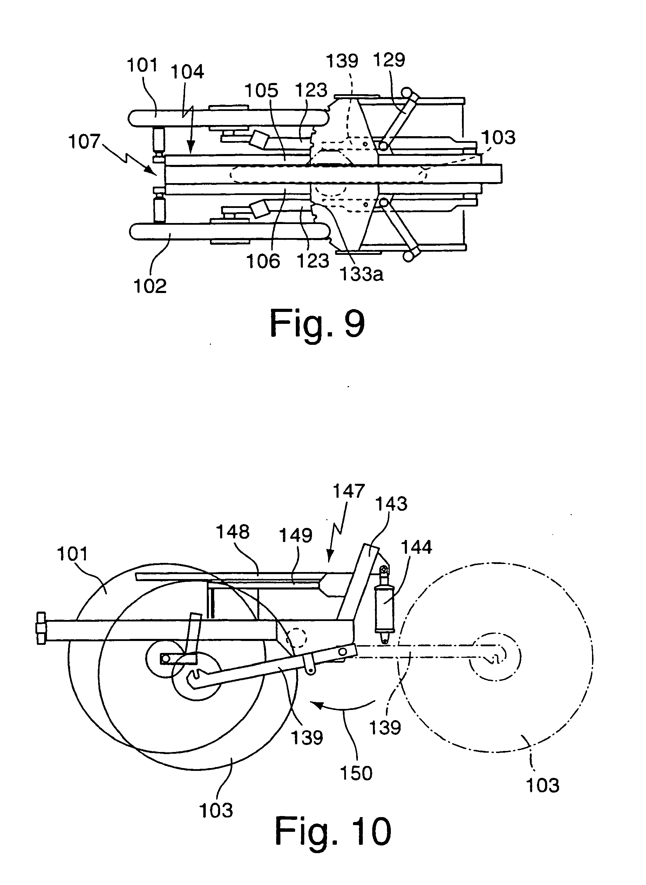

Zum Überführen des Trikes in die Transportstellung (Zusammenklappen oder Einfalten des Trikes) wird wie folgt vorgegangen, vgl. die **Figuren 7 und 8** (Fahrstellung) und **Figuren 9 und 10** (Transportstellung), wobei einige Details aus den größeren Figuren 1 bis 3 ersichtlich sind:
Zunächst wird die innere Spurstange 130 ausgehängt, d.h. die Kopplung zwischen den beiden Lenkergestängen 129 zu beiden Seiten des Zentralrahmens 104 wird gelöst (vorliegend, siehe Fig. 9, 10 werden zusätzlich auch die äußeren Spurstangen 127 gelöst, um die Lenkergestänge unabhängig von den Halbachsen 123 zurück klappen zu können, was jedoch für die Erfindung nicht zwingend ist). Dann wird der Arretierbolzen 132 aus seiner Ausnehmung 133 zurückgezogen (Man beachte, dass bevorzugt auf jeder Seite, also an beiden Halbachsen 123 ein Arretierbolzen 132 ausgebildet ist und dann entsprechend alle Arretierbolzen 132 gelöst werden). Sodann werden die Halbachsen 123 mitsamt der Vorderräder 101, 102 an den Zentralrahmen 104 herangeschwenkt, genauer auf das vordere Ende 107 des Zentralrahmens 104 zu. Man beachte, dass aufgrund der Schwenkachse 126 dabei die Vorderräder (im horizontalen Querschnitt) parallel zur Längsrichtung (Vorwärtsfahrtrichtung VFR) ausgerichtet bleiben können. In der herangeklappten Stellung einer Halbachse 123, vgl. dazu Fig. 9, kann eine Arretierung mit dem Arretierbolzen 123 in einer (typischerweise) innersten Ausnehmung 133a erfolgen (vgl. Fig. 1).

Als nächstes werden die Lenkergriffe 131 in die Lenkergestänge 129 eingeschoben.

Weiterhin wird die Lehne 148 des Sitzes 147 ausgehängt (dearretiert) und auf die Sitzschale 149 heruntergeklappt. Anschließend wird das teileingeklappte Trike um 180° gedreht und auf den Sitz 147 gestellt (Dazu können am Sitz 147 Armlehnen oder Stützen ausgebildet sind, die die Räder überragen und so das Abstellen "auf dem Kopf" erleichtern, jeweils nicht eingezeichnet).

Anschließend wird die Befestigung des Stoßdämpfers 144 gelöst, und die Achsschwinge 139 mitsamt dem Hinterrad 103 wird in Pfeilrichtung 150 verschwenkt, so dass das Hinterrad 103 zwischen die Zentralträger 105, 106 eingeschwenkt. Fig. 10 zeigt insbesondere Achsschwinge 139 und Hinterrad 103 in Fahrstellung (gestrichelt) und in Transportstellung (durchgezogene Linien). Fig. 9 zeigt die Achsschwinge 139 und das Hinterrad 103 nur in Transportstellung (gestrichelt) zwischen den Zentralträgern 105, 106.

### Linearer Handantrieb

An dem erfindungsgemäßen Trike kann auch ein linearer Handantrieb angeordnet werden, vgl. Bzz. 134 in Fig. 1 und auch die **Figuren 4 bis 6****.**

Der lineare Handantrieb 134 verfügt über einen bügelförmigen Handgriff 200 sowie einen weiteren kugelförmigen Handgriff 201 zum Ergreifen durch die Hand des Fahrers. Je nach dessen Behinderung kann alternativ einer der Handgriffe 200, 201 genutzt werden; alternativ sind auch andere ergonomische Griffformen einsetzbar.

Die Handgriffe 200, 201 sind am vorderen Ende einer Treibstange 202 mit nach unten offenem, C-förmigen Profil befestigt. Die Treibstange 202 ist im Inneren des oberen Teils eines Doppel-Profils 203, typischerweise gefertigt aus Aluminium, verfahrbar, vgl. Pfeilrichtung 205. Die Treibstange 202 ist dabei mit innen liegenden Führungsrollen 204 geführt.

Am hinteren Ende der Treibstange 202 ist ein Zahnriemen 206 befestigt, der über eine Zahnriemenscheibe 207 der Hilfsantriebswelle 135 geführt ist. Die Zahnriemenscheibe 207 ist über einen Freilauf 208 an die Hilfsantriebswelle 135 angekoppelt. Der Freilauf 208 sorgt dafür, dass nur die Kraft eines Vorwärtshubs (in Fig. 4 nach links) der Treibstange 202 auf die Hilfsantriebswelle 135 übertragen wird, und der Rückwärtshub der Treibstange 202 ohne (gegenläufige) Kraftübertragung an die Hilfsantriebswelle 135 erfolgen kann. Der Zahnriemen 206 ist anderenends an einer Rückrollfeder 209 (etwa eine Spiralfeder) befestigt, die die Treibstange 202 in eine im Doppelprofil 203 vollständig eingefahrene Position mit geringer Kraft vorspannt. Beim Vorwärtshub der Treibstange 202 wird die Rückrollfeder 209 elastisch gedehnt.

Die Hilfsantriebswelle 135 ist über eine Lagerplatte 210, eine Halteplatte 212 und einen Lagerflansch 211 befestigt und gehalten. Am inneren Ende der Hilfsantriebswelle 135 ist der Kettenritzel 136a angeordnet.

Das Doppelprofil 203 dient mit seiner Oberseite dem Fahrer als Armlehne (Armauflage). An der Oberseite des Doppelprofils 203 kann ein zusätzlicher, verstellbarer Handgriff 213 angeordnet sein.

### Federung der Vorderräder

Das erfindungsgemäße Trike kann bezüglich der Vorderräder ungefedert ausgebildet sein, bzw. nur eine Luftfederung in den Reifen der Vorderräder aufweisen, wie in Fig. 1 dargestellt.

Im folgenden wird jedoch anhand der **Figuren 11 bis 13** eine alternative Federung für die Vorderräder des erfindungsgemäßen Trikes vorgestellt, welche federnde Elemente im Bereich der vorderen Lagerbolzen vorsieht. Es wird im folgenden die Federung zu einer Seite des Trikes beschreiben; auf der anderen Seite wird eine gleiche Federung eingesetzt.

Am Zentralträger 105 sind ein oberes Knotenblech 120 und ein unteres Stützblech 121 angeschweißt oder anderweitig starr befestigt. Durch Knotenblech 120 und Stützblech 121 ist der Lagerbolzen122a geführt, wobei dieser von einem Distanzrohr 300 umgeben ist. Distanzrohr 300 und Lagerbolzen 122a werden von einem (hier zweiteiligen) elastischen Lagerfederelement 301, hier einem Sustaflex-Federelement umgriffen, welches an Knotenblech 120, Stützblech 121 und auch dem Distanzrohr 300 anliegt.

Am elastischen Lagerfederelement ist ein vorderes Teilstück 123a der Halbachse 123 befestigt; im gezeigten Fall umgreift das vordere Teilstück 123a das elastische Federelement 301 im Bereich von Einkerbungen. Das vordere Teilstück 123a und die übrige Halbachse 123 sind starr über eine Schraubverbindung (mit Abdrückschraube 302) miteinander verbunden. Das vordere Teilstück 123a kann auch als Achsenlager für die Halbachse 123 (die als Achsrohr ausgebildet ist) aufgefasst werden.

Mit der dem elastischen Lagerfederelement 301 am Lagerbolzen 122a wird schon eine gute Federung des an der Halbachse 123 angebrachten Vorderrads erreicht. Allerdings wird in die Halbachse 123 aufgrund des Versatzes V zwischen Vorderradachse und dem Ende der Halbachse 123 am Achsschenkelsystem 124 (vgl. dazu Fig. 1) eine Drehbelastung eingebracht, die am Lagerbolzen 122a als Scherbelastung wirkt. Um diese Scherbelastung am Lagerbolzen 122a zu verringern, ist ein weiteres elastisches Lagerfelderelement 303, bevorzugt ebenfalls ein Sustaflex-Element, vorgesehen. Das weitere elastische Lagerfederelement 303 ist zwischen einem Haltewinkel 304, der an der Halbachse 123 angeschweißt ist, und dem Knotenblech 120 eingespannt. Die Befestigung (Zentrierung) des weiteren Lagerfederelements 303 erfolgt mit einem Bolzen 305. Durch das weitere Lagerfederelement 303, welches bevorzugt relativ hart ausgebildet ist, wird einer axialen Drehung der Halbachse 123 entgegengewirkt. Bevorzugt ist der seitliche horizontale Versatz L zwischen Halbachse 123 und weiterem Lagerfelderelement 303 ungefähr gleich groß wie der Versatz V.

Die Verschwenkposition der Halbachse 123 um den Lagerbolzen 122a wird durch einen Sicherungsstift (Arretierbolzen, Führungsstift) 132 gesichert, welcher in ein Langloch 306 eingreift. Das Langloch 306 erlaubt eine Auf- und Ab-Bewegung der Halbachse 123, wie für eine Federung eines Rades benötigt, verhindert aber eine Drehbewegung der Halbachse 123 um den Lagerbolzen 122a. Zum Verschwenken der Halbachse 123 um den Lagerbolzen 122a, etwa zum Zusammenklappen des Trikes oder zum Wechseln der Spurweite, muss der Arretierbolzen 132 aus dem Langloch 306 entfernt werden; dazu kann der Arretierbolzen 132 beispielsweise federnd in der Halbachse 123 versenkbar sein (Fig. 11 und Fig. 12 entsprächen dann einem voll ausgefahrenen Arretierbolzen in Grundstellung). Im gezeigten Beispiel kann die Abdrückschraube 302 gegen das Knotenblech 120 so lange gedreht werden, bis der Arretierbolzen 132 ausgehängt ist, wodurch sich die Halbachse 123 frei schwenken lässt.

Das Knotenblech 120 ist durch eine Rippe 307 versteift.

### Zum Einsatz des erfindungsgemäßen Trikes als Behindertenfahrzeug und weitere Besonderheiten

Aufgrund des mindestens einen Linearantriebs kann auch eine Person, die eine Kurbelbewegung an einem normalen Fahrradantrieb oder Kurbeltrieb nicht mehr ausführen kann, mit dem erfindungsgemäßen Trike fahren. Denkbar ist insbesondere auch, dass eine Person mit einem Bein nur noch eine (gerade) Vortriebsbewegung ausführen kann, und dann mit dem erfindungsgemäßen Trike noch fahren kann. Halbseitig gelähmte Personen können einen linearen Fußantrieb und einen linearen Handantrieb beim erfindungsgemäßen Trike nutzen.

Im Extremfall ist es auch denkbar, dass eine Person mit Querschnittslähmung mit zwei Handantrieben einen Vortrieb erzeugt. Die Lenkung des Trikes sollte dann in die Handantriebe verlegt werden. Das Trike kann für einen Querschnittsgelähmten - oder auch für beliebige Fahrer für längere Bergabfahrten - mit einer Fußabstützung versehen werden.

Um auf sehr günstige (insbesondere stark untersetzende) Übersetzungsverhältnisse zu kommen, hat das Trike bevorzugt eine (in der Regel 7-Gang) Kettenschaltung am Hinterrad, eine (in der Regel 3-Gang-) Nabenschaltung an der Hinterradnabe und im Bereich der Hauptantriebswelle (in der Regel) zwei Kettenräder (Kettenritzel), so dass eine Vielzahl von Gängen (in der Regel also 42 Gänge) zur Verfügung stehen.

Aufgrund der Konstruktion eines Linearantriebs, insbesondere dessen Freilauffunktion, hat das Trike automatisch eine Rücklaufsperre (d.h. es kann am Berg nicht rückwärts rollen). Um im Einzelfall ein Rückwärtsrollen oder Rückwärtsschieben zu ermöglichen, verfügt das erfindungsgemäße Trike bevorzugt über eine Kupplung zum Lösen der Rücklaufsperre. Am einfachsten kann diese Kupplung am Antriebsrad (hier Hinterrad) vorgesehen sein, und handbetätigt werden (etwa über einen Seilzug).

Zusammenfassend beschreibt die Erfindung ein muskelkraftgetriebenes Leichtfahrzeug mit einem dreirädrigen Fahrwerk, wobei eines der Räder in einen Zwischenraum in einem geteilten Zentralrahmen zwischen die beiden anderen Räder verschwenkt werden kann. Dadurch kann das Leichtfahrzeug auf einfache Weise besonders kompakt zusammengeklappt werden. Das eingeschwenkte Rad kann mit einem Sperrmechanismus (etwa einem federnden Bolzen) gesichert werden.

### Bezugszeichenliste

- 100: Leichtfahrzeug / Trike
- 101, 102: Vorderräder
- 103: Hinterrad
- 104: Zentralrahmen
- 105, 106: Zentralträger
- 107: vorderer Teil des Zentralrahmens
- 108: hinterer Teil des Zentralrahmens
- 109: Zwischenraum zwischen den zentralträgern
- 109a: Kanal für Kurbelantrieb
- 110: Hauptantriebswelle
- 111: Schwingenachse
- 112: Treibstange
- 113: Rolllagerung
- 114: Zahnriemen
- 115: Zahnriemenscheibe
- 116: Umlenkrolle
- 117: Rückrollfeder
- 118: Pedal für Fußbetätigung
- 120: Knotenblech
- 121: Stützblech
- 122: vordere Lagerachse
- 122a: Lagerbolzen
- 123: Halbachse
- 123a: vorderes Teilstück der Halbachse
- 124: Achsschenkelsystem
- 125: Vorderradträger
- 126: Schwenkachse am Achsschenkelsystem
- 127: äußere Spurstange
- 128: Lenkerlagerachse
- 129: Lenkergestänge
- 130: innere Spurstange
- 130a: arretierende Hülse
- 131: Lenkergriff
- 132: Arretierbolzen / Sicherungsstift
- 133: Ausnehmung
- 133a: innerste Ausnehmung
- 134: linearer Handantrieb
- 135: Hilfsantriebswelle
- 136: Kette
- 136a: Kettenritzel
- 137: Schwingenlagerbolzen
- 138: Lagerblech
- 139: Achsschwinge
- 139a, 139b: Teilschwingen
- 140a: Nabe
- 140b: Kettenschaltung
- 141: Kette
- 143: Stützelement
- 144: Stoßdämpfer
- 145: bolzengesicherte Muffe
- 146: Bolzen
- 147: Sitz für Fahrer
- 148: Rückenlehne
- 149: Sitzschale
- 150: Lagerflansch
- 200: bügelförmiger Handgriff
- 201: kugelförmiger Handgriff
- 202: Treibstange
- 203: Doppel-Profil
- 204: Führungsrollen
- 205: Pfeilrichtung des Verfahrens der Treibstange
- 206: Zahnriemen
- 207: Zahnriemenscheibe
- 208: Freilauf
- 209: Rückrollfeder
- 210: Lagerplatte
- 211: Lagerflansch
- 212: Halteplatte
- 213: zusätzlicher, verstellbarer Handgriff

- 300: Distanzrohr
- 301: elastisches Lagerfederelement
- 302: Abdrückschraube
- 303: weiteres elastisches Lagerfederelement
- 304: Haltewinkel
- 305: Bolzen
- 306: Langloch
- 307: Rippe

## Patentansprüche

1. Leichtfahrzeug (100), umfassend
ein Fahrwerk für zwei Vorderräder (101, 102) und ein Hinterrad (103), wenigstens einen Sitz (147) für einen Fahrer,
einen Zentralrahmen (104), an dem das Fahrwerk befestigt ist und welcher sich im Wesentlichen in Längsrichtung (Vorwärtsfahrtrichtung VFR) des Leichtfahrzeugs (100) erstreckt,
und wenigstens einen Linearantrieb zum Antrieb des Leichtfahrzeugs (100), insbesondere des Hinterrads (103) des Leichtfahrzeugs (100), mittels Muskelkraft,
wobei im Bereich des hinteren Endes (108) des Zentralrahmens (104) am Zentralrahmen (104) eine Achsschwinge (139) schwenkbar gelagert ist, in welcher wiederum das Hinterrad (103) gelagert ist, wobei die Achsschwinge (139) in einer vertikalen Ebene, die parallel zur Längsrichtung (VFR) des Leichtfahrzeugs (100) verläuft, verschwenkbar ist,
**dadurch gekennzeichnet,**
**dass** der Zentralrahmen (104) zwei sich im Wesentlichen in Längsrichtung (VFR) des Leichtfahrzeugs (100) erstreckende Zentralträger (105, 106) umfasst,
wobei die beiden Zentralträger (105, 106) in horizontaler Richtung beabstandet angeordnet sind,
und **dass** durch Verschwenken der Achsschwinge (139) das Hinterrad (103) in den Zwischenraum (109) zwischen den beiden Zentralträgem (105, 106) hinein klappbar ist.

2. Leichtfahrzeug (100) nach Anspruch 1, **dadurch gekennzeichnet,**
**dass** an den beiden Seiten des Zentralrahmens (104) an jedem Zentralträger (105, 106) jeweils eine vertikal verlaufende vordere Lagerachse (122), insbesondere ein vertikal verlaufender Lagerbolzen (122a), ausgebildet ist, um die jeweils eine Halbachse (123) schwenkbar ist,
**dass** am Ende der Halbachsen (123) jeweils ein Achsschenkelsystem (124) ausgebildet ist, an dem ein Vorderrad (101, 102) lenkbar gelagert ist, und dass durch Verschwenken der Halbachsen (123) diese mitsamt den jeweils gelagerten Vorderrädern (101, 102) an den Zentralrahmen (104) heran klappbar sind.

3. Leichtfahrzeug (100) nach Anspruch 2, **dadurch gekennzeichnet,**
**dass** an den beiden Seiten des Zentralrahmens (104) an jedem Zentralträger (105, 106) jeweils eine vertikal verlaufende Lenkerlagerachse (128) ausgebildet ist, um die jeweils ein Lenkergestänge (129), insbesondere ein Lenkerrohr, schwenkbar ist,
wobei die Lenkergestänge (129) jeweils über eine äußere Spurstange (127) an einen Vorderradträger (125) des Achsschenkelsystems (124) der gleichen Seite angelenkt sind,
**dass** die beiden Lenkergestänge (129) über eine innere Spurstange (130) gekoppelt sind,
und **dass** die innere Spurstange (130) zum Einklappen der Halbachsen (123) lösbar oder teilbar ist.

4. Leichtfahrzeug (100) nach einem der Ansprüche 2 oder 3 , **dadurch gekennzeichnet,**
**dass** ein Arretiersystem vorgesehen ist, mit dem die Halbachsen (123) in mehreren Verschwenkpositionen, insbesondere wenigstens drei Verschwenkpositionen je Halbachse (123), relativ zum Zentralrahmen (104) arretiert werden können,
und dazu die innere Spurstange (130) längenverstellbar und in mehreren Längeneinstellungen arretierbar ist.

5. Leichtfahrzeug (100) nach Anspruch 4, **dadurch gekennzeichnet,**
**dass** das Arretiersystem zwei Knotenbleche (120), insbesondere rippenversteifte Knotenbleche (120), mit jeweils einer im Wesentlichen in einer horizontalen Ebene verlaufenden, kreisbogenförmigen Außenkante umfasst, entlang der mehrere Ausnehmungen (133, 133a), Vorsprünge oder Löcher (306) für einen Eingriff eines Arretierbolzens (132) vorgesehen sind,
und **dass** das Arretierungssystem weiterhin an den Halbachsen (123) jeweils einen Arretierbolzen (132) zum Eingriff in die Ausnehmungen (133, 133a), Vorsprünge oder Löcher (306) eines Knotenblechs (120) umfasst.

6. Leichtfahrzeug (100) nach einem der Ansprüche 2 bis 5, **dadurch gekennzeichnet,**
**dass** die beiden vorderen Lagerachsen (122) jeweils als Lagerbolzen (122a) ausgebildet sind, wobei die Lagerbolzen (122a) jeweils zwischen einem horizontalen Knotenbloch (120) und einem horizontalen Stützblech (121) verlaufen, die am benachbarten Zentralträger (105, 106) befestigt sind,
**dass** die Lagerbolzen (122a) jeweils von einem elastischen Lagerfederelement (301), insbesondere Sustaflexelement, umgriffen sind, das auch am Knotenblech (120) und Stützblech (121) anliegt,
und **dass** an den Lagerfederelementen (301) jeweils die zugehörige Halbachse (123) befestigt ist.

7. Leichtfahrzeug (100) nach Anspruch 6, **dadurch gekennzeichnet,**
**dass** an den Halbachsen (123) jeweils ein Haltewinkel (304) befestigt ist, auf dem ein weiteres elastisches Lagerfederelement (303), insbesondere weiteres Sustaflexelement, befestigt ist, wobei das weitere Lagerfederelement (303) zwischen dem Haltewinkel (304) und dem Knotenblech (120) eingespannt ist,
und **dass** die weiteren Lagerfederelemente (303) jeweils gegenüber der zugehörigen Halbachse (123) um einen Längenbetrag L seitlich horizontal versetzt sind,
insbesondere wobei der Längenbetrag L näherungsweise gleich ist dem seitlichen, horizontalen Versatz V zwischen dem Ende der Halbachse (123) und der Vorderradachse am zugehörigen Achsschenkelsystem (124).

8. Leichtfahrzeug (100) nach Anspruch 6 oder 7, **dadurch gekennzeichnet, dass** die horizontalen Knotenbleche (120) jeweils mindestens ein Langloch (306) aufweisen, die von einem vertikalen, federnden Sicherungsstift (132) durchragt werden können, wobei jeweils ein solcher Sicherungsstift (132) an jeder Halbachse (123) ausgebildet ist.

9. Leichtfahrzeug (100) nach einem der vorhergehenden Ansprüche, **dadurch gekennzeichnet,**
**dass** in wenigstens einem der Zentralträger (105, 106) ein Linearantrieb ausgebildet ist, umfassend eine Treibstange (112), die im Zentralträger (105, 106) linear geführt ist und an deren vorderem Ende ein Pedal (118) angeordnet ist,
insbesondere wobei in beiden Zentralträgern (105, 106) jeweils ein solcher Linearantrieb ausgebildet ist.

10. Leichtfahrzeug (100) nach einem der vorhergehenden Ansprüche, **dadurch gekennzeichnet,**
**dass** wenigstens ein handbetätigbarer Linearantrieb (134) vorgesehen ist, umfassend eine Treibstange (202), die insbesondere in einer Armlehne des Sitzes (147) linear geführt ist, wobei am Ende der Treibstange (202) ein Handgriff (200, 201) angeordnet ist..

11. Leichtfahrzeug (100) nach einem der vorhergehenden Ansprüche, **dadurch gekennzeichnet,**
**dass** im Bereich des hinteren Endes (108) des Zentralrahmens (104) im Zentralrahmen (104) eine Hauptantriebswelle (110) gelagert ist, auf die durch den wenigstens einen Linearantrieb Kraft übertragbar ist, und die an die Achse des Hinterrads (103) gekoppelt ist.

12. Leichtfahrzeug (100) nach Anspruch 11, **dadurch gekennzeichnet, dass** die Hauptantriebswelle (110) und die Hinterradachse über eine Kette (141), einen Zahnriemen oder ein anderes Antriebsmittel gekoppelt sind, wobei die Kette (141), der Zahnriemen oder das andere Antriebsmittel mit einem Spanner zum Längenausgleich versehen ist,
insbesondere wobei der Antrieb des Hinterrads über eine Kettenschaltung (140b) erfolgt.

13. Leichtfahrzeug (100) nach einem der vorhergehenden Ansprüche, **dadurch gekennzeichnet,**
**dass** die Achsschwinge (139) des Leichtfahrzeugs (100) über einen Stoßdämpfer (144) oder ein anderes Federelement an einem Stützelement (143), insbesondere einem Stützrohr, befestigt ist, wobei das Stützelement (143) am Zentralrahmen (104) starr befestigt ist,
und **dass** die Befestigung des Stoßdämpfers (144) oder anderen Federelements an der Achsschwinge (139) für das Einklappen des Hinterrads (103) lösbar ist.

14. Leichtfahrzeug (100) nach einem der vorhergehenden Ansprüche, **dadurch gekennzeichnet, dass** zwei fußbetätigbare Linearantriebe in den Zentralträgern (105, 106), zwei handbetätigbare Linearantriebe (134) sowie ein Kurbelantrieb vorgesehen sind, die unabhängig voneinander zum Antrieb des Hinterrads (103) mittels Muskelkraft einsetzbar sind.

15. Leichtfahrzeug (100) nach einem der vorhergehenden Ansprüche, **dadurch gekennzeichnet, dass** anstelle des Fahrwerks für zwei Vorderräder (101, 102) und ein Hinterrad (103) ein Fahrwerk für ein Vorderrad und zwei Hinterräder vorgesehen ist,
wobei im Bereich des vorderen Endes des Zentralrahmens am Zentralrahmen eine Achsschwinge schwenkbar gelagert ist, in welcher wiederum das Vorderrad gelagert ist,
und wobei durch Verschwenken der Achsschwinge das Vorderrad in den Zwischenraum zwischen den beiden Zentralträgem hinein klappbar ist.

## Claims

1. Lightweight vehicle (100), comprising
a chassis for two front wheels (101, 102) and a rear wheel (103),
at least one seat (147) for a rider,
a central frame (104) to which the chassis is mounted and which substantially extends in the longitudinal direction (forward direction of travel VFR) of the lightweight vehicle (100),
and at least one linear drive for driving the lightweight vehicle (100), in particular the rear wheel (103) of the lightweight vehicle (100), by muscle power,
wherein in the area of the rear end (108) of the central frame (104) an axle rocker (139) is pivotably supported on the central frame (104), in which axle rocker (139), in turn, the rear wheel (103) is supported, wherein the axle rocker (139) can be pivoted in a vertical plane which extends parallel to the longitudinal direction (VFR) of the lightweight vehicle (100),
**characterized in that**
the central frame (104) comprises two central supports (105, 106) which substantially extend in the longitudinal direction (VFR) of the lightweight vehicle (100) ,
wherein the two central supports (105, 106) are arranged spaced apart from each other in a horizontal direction,
and the rear wheel (103) can be folded into the intermediate space (109) between the two central supports (105, 106) by pivoting the axle rocker (139).

2. Lightweight vehicle (100) according to claim 1, **characterized in that** one vertically extending front bearing axle (122), in particular a vertically extending bearing pin (122a), is formed on each central support (105, 106) on both sides of the central frame (104), about which front bearing axle (122) a respective semiaxis (123) can be pivoted in each case,
one axial leg system (124) is formed at each end of the semiaxes (123), on which axial leg system (124) a front wheel (101, 102) is steerably supported,
and the semiaxes (123) together with the respectively supported front wheels (101, 102) can be folded to the central frame (104) by pivoting the semiaxes (123).

3. Lightweight vehicle (100) according to claim 2, **characterized in that** one vertically extending steering bearing axle (128) is formed on each central support (105, 106) on both sides of the central frame (104), about which steering bearing axle (128) one steering linkage (129), in particular a steering tube, can be pivoted in each case,
wherein each steering linkage (129) is hinged to a front wheel support (125) of the axial leg system (124) of the same side via an outer tie rod (127) in each case,
the two steering linkages (129) are coupled via an inner tie rod (130), and the inner tie rod (130) is detachable or divisible for folding in the semiaxes (123).

4. Lightweight vehicle (100) according to any one of the claims 2 or 3, **characterized in that** a locking system is provided for locking the semiaxes (123) in several pivoted positions, in particular at least three pivoted positions per semiaxis (123), relative to the central frame (104),
for which purpose the inner tie rod (130) can be adjusted in length and be locked in several length adjustments.

5. Lightweight vehicle (100) according to claim 4, **characterized in that** the locking system comprises two gusset plates (120), in particular gusset plates (120) that are stiffened by ribs, each having a circularly arcuated outer edge which extends substantially in a horizontal plane and along which several recesses (133, 133a), projections or holes (306) are provided for engagement of a locking bolt (132),
and the locking system moreover comprises one locking bolt (132) on each semiaxis (123) for engagement with the recesses (133, 133a), projections or holes (306) of a gusset plate (120).

6. Lightweight vehicle (100) according to any one of the claims 2 to 5, **characterized in that**
the two front bearing axles (122) are each designed as a bearing bolt (122a), wherein each bearing bolt (122a) extends between a horizontal gusset plate (120) and a horizontal support plate (121), which are mounted to a neighboring central support (105, 106),
each bearing bolt (122a) is encompassed by an elastic bearing spring element (301), in particular a sustaflex element, which also abuts the gusset plate (120) and the support plate (121), and
the associated semiaxis (123) is mounted to each bearing spring element (301).

7. Lightweight vehicle (100) according to claim 6, **characterized in that** one retaining bracket (304) is mounted to each semiaxis (123), to which retaining bracket a further elastic bearing spring element (303), in particular a further sustaflex element, is mounted, wherein the further bearing spring element (303) is clamped between the retaining bracket (304) and the gusset plate (120),
and each further bearing spring element (303) is laterally horizontally offset with respect to the associated semiaxis (123) by a length L,
in particular, wherein the length L is approximately equal to the lateral horizontal offset V between the end of the semiaxis (123) and the front wheel axis on the associated axial leg system (124).

8. Lightweight vehicle (100) according to claim 6 or 7, **characterized in that** each horizontal gusset plate (120) comprises at least one elongated hole (306) through which a vertical resilient securing pin (132) can project, wherein such a securing pin (132) is formed on each semiaxis (123).

9. Lightweight vehicle (100) according to any one of the preceding claims, **characterized in that**
a linear drive is formed in at least one of the central supports (105, 106), the linear drive comprising a connecting rod (112) which is linearly guided in the central support (105, 106) and the front end of which is provided with a pedal (118),
in particular, wherein such a linear drive is provided in each of the two central supports (105, 106).

10. Lightweight vehicle (100) according to any one of the preceding claims, **characterized in that** at least one manually operable linear drive (134) is provided, comprising a connecting rod (202) which is linearly guided, in particular, in an arm rest of the seat (147), wherein a handle (200, 201) is arranged at the end of the connecting rod (202).

11. Lightweight vehicle (100) according to any one of the preceding claims, **characterized in that**
a main drive shaft (110) is supported in the central frame (104) in the area of the rear end (108) of the central frame (104), to which main drive shaft (110) force can be transmitted via the at least one linear drive and which is coupled to the axle of the rear wheel (103).

12. Lightweight vehicle (100) according to claim 11, **characterized in that** the main drive shaft (110) and the rear wheel axle are coupled via a chain (141), a toothed belt or another drive means, wherein the chain (141), the toothed belt or the other drive means are provided with a tightener for length compensation,
in particular, wherein the rear wheel is driven by a derailleur gear system (140b).

13. Lightweight vehicle (100) according to any one of the preceding claims, **characterized in that**
the axle rocker (139) of the lightweight vehicle (100) is fixed to a support element (143), in particular a support tube, via a shock absorber (144) or a different spring element, wherein the support element (143) is rigidly fixed to the central frame (104),
and the fixation of the shock absorber (144) or the different spring element to the axle rocker (139) can be released for folding in the rear wheel (103).

14. Lightweight vehicle (100) according to any one of the preceding claims, **characterized in that** two linear drives, which can be operated by foot, are provided in the central supports (105, 106), as well as two manually operable linear drives (134) and a crank drive, which can be used independently of each other for driving the rear wheel (103) by muscle power.

15. Lightweight vehicle (100) according to any one of the preceding claims, **characterized in that** a chassis for one front wheel and two rear wheels is provided instead of the chassis for two front wheels (101, 102) and one rear wheel (103),
wherein an axle rocker is pivotably supported on the central frame in the area of the front end of the central frame, in which axle rocker, in turn, the front wheel is supported,
and wherein the front wheel can be folded into the intermediate space between the two central supports by pivoting the axle rocker.

## Revendications

1. Véhicule léger (100) comprenant
un châssis de roulement dédié à deux roues avant (101, 102) et à une roue arrière (103),
au moins un siège (147) destiné à un conducteur,
un cadre central (104) auquel ledit châssis de roulement est fixé et qui s'étend, pour l'essentiel, dans la direction longitudinale (direction de marche avant VFR) du véhicule léger (100),
et au moins un entraînement linéaire conçu pour entraîner, sous l'action d'une force musculaire, le véhicule léger (100) et notamment la roue arrière (103) dudit véhicule léger (100),
un bras d'essieu oscillant (139) étant monté à pivotement sur le cadre central (104) dans la région de l'extrémité postérieure (108) dudit cadre central (104), bras dans lequel la roue arrière (103) est à son tour montée, ledit bras d'essieu oscillant (139) étant apte à pivoter dans un plan vertical s'étendant parallèlement à la direction longitudinale (VFR) du véhicule léger (100),
**caractérisé par le fait**
**que** le cadre central (104) comprend deux supports centraux (105, 106) s'étendant, pour l'essentiel, dans la direction longitudinale (VFR) du véhicule léger (100),
les deux supports centraux (105, 106) étant disposés avec espacement dans la direction horizontale ;
et **que** la roue arrière (103) peut être rabattue, par pivotement du bras d'essieu oscillant (139), dans l'espace interstitiel (109) situé entre les deux supports centraux (105, 106).

2. Véhicule léger (100) selon la revendication 1, **caractérisé par le fait**
**qu'**un axe antérieur de portée (122) s'étendant verticalement, en particulier un tourillon de portée (122a) s'étendant verticalement et autour duquel un demi-essieu respectif (123) peut pivoter, est respectivement ménagé des deux côtés du cadre central (104), sur chaque support central (105, 106) ;
**qu'**un système (124) à fusées d'essieux, sur lequel une roue avant (101, 102) est montée avec faculté de braquage, est respectivement ménagé à l'extrémité des demi-essieux (123) ;
et **qu'**un pivotement desdits demi-essieux (123) permet de plaquer ces derniers contre ledit cadre central (104), conjointement aux roues avant (101, 102) respectivement montées.

3. Véhicule léger (100) selon la revendication 2, **caractérisé par le fait**
**qu'**un axe respectif (128) de montage articulé, s'étendant verticalement et autour duquel une tringlerie articulée (129) et notamment une tubulure articulée peut respectivement pivoter, est ménagé des deux côtés du cadre central (104), sur chaque support central (105, 106),
les tringleries articulées (129) étant respectivement rattachées, par l'intermédiaire d'une barre extérieure d'accouplement (127), à un support (125) de roue avant du système (124) à fusées d'essieux situé du même côté ;
**que** les deux tringleries articulées (129) sont couplées par l'intermédiaire d'une barre intérieure d'accouplement (130) ;
et **que** ladite barre intérieure d'accouplement (130) peut être dissociée ou scindée, en vue du pivotement rentrant des demi-essieux (123).

4. Véhicule léger (100) selon l'une des revendications 2 ou 3, **caractérisé par le fait**
**qu'**il est prévu un système d'arrêt à l'aide duquel les demi-essieux (123) peuvent être arrêtés, vis-à-vis du cadre central (104), dans plusieurs positions prises par pivotement et, en particulier, dans au moins trois positions de chaque demi-essieu (123) prises par pivotement,
la barre intérieure d'accouplement (130) pouvant, à cet effet, être réglée en longueur et arrêtée dans plusieurs réglages en longueur.

5. Véhicule léger (100) selon la revendication 4, **caractérisé par le fait**
**que** le système d'arrêt inclut deux goussets d'assemblage (120), en particulier des goussets d'assemblage (120) rigidifiés par des nervures et respectivement munis d'un bord extérieur en arc de cercle qui s'étend, pour l'essentiel, dans un plan horizontal et le long duquel plusieurs évidements (133, 133a), mentonnets ou trous (306) sont prévus pour la pénétration d'un goujon d'arrêt (132) ;
et **que** ledit système d'arrêt inclut par ailleurs, sur les demi-essieux (123), un goujon d'arrêt respectif (132) conçu pour pénétrer dans les évidements (133, 133a), mentonnets ou trous (306) d'un gousset d'assemblage (120).

6. Véhicule léger (100) selon l'une des revendications 2 à 5, **caractérisé par le fait**
**que** les deux axes antérieurs de portée (122) sont respectivement réalisés sous la forme de tourillons de portée (122a), lesquels tourillons de portée (122a) s'étendent, à chaque fois, entre un gousset horizontal d'assemblage (120) et une tôle horizontale d'appui (121) qui sont fixés au support central (105, 106) voisin ;
**que** lesdits tourillons de portée (122a) sont respectivement ceinturés par un élément élastique de portée (301), en particulier un élément Sustaflex qui est également en applique contre ledit gousset d'assemblage (120) et contre ladite tôle d'appui (121) ;
et **que** le demi-essieu (123) associé est respectivement fixé aux éléments élastiques de portée (301).

7. Véhicule léger (100) selon la revendication 6, **caractérisé par le fait**
**qu'**une cornière de retenue (304), sur laquelle est fixé un élément élastique de portée (303) supplémentaire, en particulier un élément Sustaflex, est respectivement fixée aux demi-essieux (123), ledit élément élastique de portée (303) supplémentaire étant enserré entre ladite cornière de retenue (304) et le gousset d'assemblage (120) ;
et **que** les éléments élastiques de portée (303) supplémentaires accusent respectivement, vis-à-vis du demi-essieu (123) associé, un décalage latéral d'une cote en longueur L dans le sens horizontal,
sachant notamment que ladite cote en longueur L est approximativement égale au décalage latéral horizontal V entre l'extrémité du demi-essieu (123) et l'essieu de roue avant, sur le système associé (124) à fusées d'essieux.

8. Véhicule léger (100) selon la revendication 6 ou 7, **caractérisé par le fait**
**que** les goussets horizontaux d'assemblage (120) sont respectivement pourvus d'au moins un trou oblong (306) pouvant être traversé par un goujon d'arrêt (132) vertical et élastique, un tel goujon d'arrêt (132) étant respectivement ménagé sur chaque demi-essieu (123).

9. Véhicule léger (100) selon l'une des revendications précédentes, **caractérisé par le fait**
**qu'**un entraînement linéaire, implanté dans au moins l'un des supports centraux (105, 106), comprend une tige motrice (112) qui est guidée linéairement dans ledit support central (105, 106), et à l'extrémité antérieure de laquelle une pédale (118) est disposée, sachant notamment qu'un tel entraînement linéaire est respectivement implanté dans les deux supports centraux (105, 106).

10. Véhicule léger (100) selon l'une des revendications précédentes, **caractérisé par le fait**
**qu'**il est prévu au moins un entraînement linéaire (134) actionnable à la main, comprenant une tige motrice (202) guidée linéairement, en particulier dans un accoudoir du siège (147), une poignée (200, 201) étant disposée à l'extrémité de ladite tige motrice (202).

11. Véhicule léger (100) selon l'une des revendications précédentes, **caractérisé par le fait**
**qu'**un arbre principal d'entraînement (110) auquel une force peut être transmise par l'intermédiaire de l'entraînement linéaire à présence minimale, et qui est couplé à l'essieu de la roue arrière (103), est monté dans le cadre central (104), dans la région de l'extrémité postérieure (108) dudit cadre central (104).

12. Véhicule léger (100) selon la revendication 11, **caractérisé par le fait**
**que** l'arbre principal d'entraînement (110) et l'essieu de la roue arrière sont couplés par l'intermédiaire d'une chaîne (141), d'une courroie crantée ou d'un autre moyen d'entraînement, ladite chaîne (141), ladite courroie crantée ou ledit autre moyen d'entraînement étant muni(e) d'un tendeur, en vue de la compensation en longueur, sachant notamment que l'entraînement de ladite roue arrière s'opère par l'intermédiaire d'un dérailleur (140b).

13. Véhicule léger (100) selon l'une des revendications précédentes, **caractérisé par le fait**
**que** le bras d'essieu oscillant (139) dudit véhicule léger (100) est fixé à un élément d'appui (143), notamment à une tubulure d'appui, par l'intermédiaire d'un amortisseur de chocs (144) ou d'un autre élément élastique, ledit élément d'appui (143) étant fixé rigidement au cadre central (104) ;
et **que** la fixation dudit amortisseur de chocs (144) ou dudit autre élément élastique, audit bras d'essieu oscillant (139), peut être dissociée en vue du pivotement rentrant de la roue arrière (103).

14. Véhicule léger (100) selon l'une des revendications précédentes, **caractérisé par**
la présence de deux entraînements linéaires actionnables au pied et implantés dans les supports centraux (105, 106), de deux entraînements linéaires (134) actionnables à la main, ainsi que d'un entraînement à manivelle, qui peuvent être utilisés indépendamment les uns des autres en vue de l'entraînement de la roue arrière (103) sous l'action d'une force musculaire.

15. Véhicule léger (100) selon l'une des revendications précédentes, **caractérisé par le fait**
**qu'**un châssis de roulement, dévolu à une roue avant et à deux roues arrière, est prévu à la place du châssis de roulement dédié à deux roues avant (101, 102) et à une roue arrière (103),
un bras d'essieu oscillant étant monté à pivotement sur le cadre central dans la région de l'extrémité antérieure dudit cadre central, bras dans lequel la roue avant est à son tour montée,
et ladite roue avant pouvant être rabattue, par pivotement dudit bras d'essieu oscillant, dans l'espace interstitiel situé entre les deux supports centraux.
